Europäisches Patentamt

(19) European Patent Office

Office européen des brevets

(11) EP 0 506 515 B1

## (12) FASCICULE DE BREVET EUROPEEN

(45) Date de publication et mention
de la délivrance du brevet:
**14.08.1996 Bulletin 1996/33**

(51) Int. Cl.⁶: **B29C 33/68**, C08L 77/00
// B29K77/00

(21) Numéro de dépôt: **92400707.3**

(22) Date de dépôt: **17.03.1992**

(54) **Film de rélachement en alliage polyamide/polyoléfine pour la fabrication d'un produit de compoundage de moulage de feuilles, produit de compoundage de feuilles prépare avec ce film**

Trennfolie aus Polyamid/Polyolefin-Mischungen für formbaren Schichtwerkstoff und damit hergestellter Schichtwerkstoff

Polyamide/polyolefine blend release film for the production of sheet moulding compound and sheet moulding compound produced with such film

(84) Etats contractants désignés:
**AT BE CH DE DK ES FR GB GR IT LI LU NL PT SE**

(30) Priorité: **29.03.1991 FR 9103870**

(43) Date de publication de la demande:
**30.09.1992 Bulletin 1992/40**

(73) Titulaire: **ELF ATOCHEM S.A.**
**F-92800 Puteaux (FR)**

(72) Inventeurs:
• **Bouilloux, Alain**
  **F-27300 Bernay (FR)**

• **Girard, Jacques**
  **F-75015 Paris (FR)**
• **Glotin, Michel**
  **F-27470 Serquigny (FR)**

(74) Mandataire: **Hirsch, Marc-Roger et al**
**Cabinet Hirsch**
**34 rue de Bassano**
**75008 Paris (FR)**

(56) Documents cités:
EP-A- 0 027 191          EP-A- 0 342 066
GB-A- 2 225 582          GB-A- 2 225 583

Printed by Rank Xerox (UK) Business Services
2.13.0/3.4

## Description

La présente invention concerne un film en alliage polyamide/polyoléfine, utilisable pour la préparation de produit de compoundage pour le moulage de feuilles, plus brièvement SMC (pour Sheet Moulding Compound).

Le SMC est utilisé dans la fabrication de pièces transformées aussi bien dans les domaines automobile (parechocs, hayons ...) que ceux du nautisme (coques de bateaux) ou de l'électronique (carters).

Le SMC est généralement composé d'une résine polymère réticulable, en particulier un polyester insaturé, de charges de renforcement telles que des fibres de verre, ainsi que de divers autres additifs en quantités peu importantes.

Le SMC est ordinairement préparé en déposant des fibres sur une couche de résine polyester non saturé, elle-même supportée sur un film mobile, composé en général de polyéthylène ou de polyamide.

Un autre film de même nature est ensuite déposé au-dessus du système résine/charge de renforcement pour former une masse composite en sandwich entre deux films. Le sandwich passe ensuite à travers une série de rouleaux de pétrissage et de compactage et est généralement enroulé sous forme de grands rouleaux.

Il est alors stocké avec transformation ultérieure. Lors de la période de stockage, la résine polyester réticule partiellement, provoquant une augmentation de la viscosité du SMC, jusqu'à atteindre une consistance le rendant apte au moulage.

Les utilisateurs de SMC, en général les mouleurs, coupent un morceau de dimensions appropriées à partir du rouleau, retirent par pelage le film de support et placent le SMC dans un moule chauffé pour la transformation et la cuisson complète simultanées. Ainsi, des masses composites en sandwich de SMC trouvent une application facile dans des modes opératoires de moulage par compression.

Trois propriétés concernant le film sandwich sont d'importance capitale pour les fabricants et les utilisateurs de SMC.

La première a trait à la perméabilité au styrène du film pelable. Il est nécessaire que ce film pelable ait une perméabilité au styrène très faible afin d'éviter la perte de styrène monomère qui joue le rôle d'agent de réticulation dans le SMC. Cette perte de styrène monomère est également préjudiciable pour la santé des individus lors des opérations de fabrication du SMC et de son stockage.

La deuxième propriété concerne la facilité de pelage de ce film sur la structure polyester, afin qu'il ne subsiste pas de film résiduel sur la structure et d'éviter les risques de déchirure de ce film lors des opérations de fabrication et de transformation du SMC.

Enfin, la reprise d'humidité et la perméabilité à l'eau de ces films pelables doivent être très faibles pour que la qualité de la résine polyester, très sensible à l'eau, ne soit pas altérée lors des opérations de fabrication du SMC, du stockage du polyester ou de la transformation du SMC.

Comme indiqué ci-dessus, le polyéthylène est utilisé en qualité de film pelable dans le SMC. Si les caractéristiques du polyéthylène conviennent pour les opérations de pelage automatisées, et que son inertie à l'eau est satisfaisante pour cette application, il présente une très grande perméabilité au styrène, qui nécessite généralement l'enveloppement de ces rouleaux dans des feuilles d'aluminium.

GB-A-2 225 583 décrit et revendique des films de polyamides et de copolyoléfines greffées, dans lequel le constituant polyamide représente 70% et plus en poids. Ce film est utilisé dans le domaine des SMC. Les exemples mentionnent des proportions en poids, pour le constituant polyamide, de 87%, 86%, 85%, 84%, 83% et 80%.

Dans le brevet EP 27 191 au nom d'ALLIED CHEMICAL CORPORATION, il est décrit un film de relâchement en polyamide pour l'utilisation dans la fabrication de SMC où le film a une faible cristallinité et est composé d'un mélange de 70 à 90% en poids d'un polyamide (PA-6 et/ou PA-6/6) de cristallinité inférieure à 35% et de 10 à 30% d'un composant de polyoléfine ou de son copolymère, la polyoléfine ayant une cristallinité de moins de 50%. La polyoléfine est une alpha-oléfine à haut poids moléculaire ou son copolymère composé d'une alpha-oléfine et d'un monomère acétate de vinyle ou acrylate d'alkyle. Le film d'épaisseur comprise entre 12,7 et 127 $\mu$m, présente une résistance à la déchirure de Graves d'au moins 400 g dans la direction longitudinale, comme déterminé par ASTM D-1004-66 et une perméabilité au styrène inférieure à 200 x $10^{-9}$ g-cm/cm$^2$-h.

Les films PA disponibles commercialement, bien que possédant de bonnes caractéristiques vis-à-vis de la perméabilité au styrène, ont des propriétés de pelabilité suffisantes tant que les procédés de défilmage restent manuels, mais ces mêmes propriétés s'avèrent insuffisantes avec les procédés de défilmage automatique qui se développent aujourd'hui.

Par ailleurs, avec le remplacement progressif des films PE par les films PA, s'est ajouté le problème lié à la grande sensibilité des polyamides à l'humidité. L'eau vient en effet dégrader la résine polyester ou époxy, ce qui entraîne des défauts majeurs dans les pièces en SMC transformées. Pour y remédier, les fournisseurs de ces films doivent protéger les bobines par des films en aluminium avant livraison chez les fabricants de SMC et dans les zones de stockage du SMC avant transformation finale, ce qui augmente les coûts de façon non négligeable.

La présente invention concerne un film de polyamide/polyoléfine compatibilisé, d'épaisseur en général comprise entre 10 et 130 $\mu$m, et de préférence entre 20 et 50 $\mu$m, comprenant les produits A, B, C, D, où:

A est constitué d'au moins une polyoléfine composée d'une alpha-oléfine complètement ou partiellement linéaire dont le poids moléculaire est compris entre 1 000 et 1 000 000;

B représente l'alpha-oléfine décrite en A sur laquelle un ou deux monomère(s) fonctionnalisé(s) sont greffés; le taux de greffage du ou des monomère(s) fonctionnalisé(s) étant compris entre 500 ppm et 6% en poids;

C est un copolymère greffé constitué d'au moins un oligomère mono-aminé de polyamide et d'un polymère ou copolymère d'alpha mono-oléfine greffé par un monomère pouvant réagir avec la fonction amine dudit oligomère mono-aminé;

D est constitué d'au moins un (co)polyamide aliphatique constitué:

> (i) d'un polyamide obtenu à partir d'acide aliphatique dicarboxylique et d'une diamine aliphatique, chacun possédant entre 6 et 24 atomes de carbone, et/ou
> (ii) d'un polyamide obtenu à partir d'un acide amino-aliphatique ou de lactame ayant 6 à 24 atomes de carbone.

Les composants A, B, C et D sont décrits plus en détail ci-dessous:

A est constitué d'au moins une polyoléfine composée d'une alpha-oléfine complètement ou partiellement linéaire à haut poids moléculaire, par exemple le polyéthylène, le polypropylène ou polyisobutylène, copolymères des alpha-oléfines avec des monomères d'acétate de vinyle, tels que les copolymères éthylène/acétate de vinyle, ou d'acrylates d'alkyles, tels que les copolymères éthylène/acrylate de méthyle ou éthylène/acrylate d'éthyle, ou copolymères de l'éthylène et d'une alpha-oléfine ayant de 3 à 10 atomes de carbone. Le poids moléculaire de A étant en général compris entre 1 000 et 1 000 000, et de préférence entre 10 000 et 500 000, ce qui correspond à un indice de fusion (Melt Index: MI) compris entre 0,1 et 300 g/10 minutes mesuré à 230°C sous 2,16 kg.

B représente l'alpha-oléfine décrite en A sur laquelle est greffée un monomère fonctionnalisé, choisi parmi les acides acrylique, méthacrylique, maléique, fumarique, itaconique, crotonique, 3-dicarboxylique-5-norbornène-2, les anhydrides maléique, diméthylmaléique, les maléates de monosodium, disodium, l'acrylamide, les anhydrides itaconique, citraconique, le maléimide, le N-phénylmaléimide, le fumarate de diéthyle, la vinylpyridine, les vinylsilanes, la 4-vinylpyridine, le vinylthiéthoxysilane, l'alcool allylique, et en particulier l'acide maléique, l'anhydride maléique ou l'acide fumarique. Deux monomères à greffer peuvent être utilisés simultanément et choisis parmi le styrène, le 2-méthylstyrène, le 4-méthylstyrène, l'alphaméthylstyrène, le bétaméthylstyrène, le vinyl-4-anisole, le stilbène et l'indène ou un mélange de ces composants; l'autre monomère à greffer est choisi parmi les anhydrides maléique, itaconique, citraconique, le maléimide et le N-phénylmaléimide ou un mélange de ces composés. En général, le taux de greffage du ou des monomère(s) fonctionnalisé(s) est compris entre 500 ppm et 6% en poids et, de préférence, inférieur à 2%.

C est un copolymère greffé constitué d'au moins un oligomère mono-aminé de polyamide et d'un polymère ou copolymère d'alpha mono-oléfine greffé par un monomère pouvant réagir avec la fonction amine de l'oligomère décrit dans la demande de brevet EP 342 066.

D est constitué d'au moins un (co)polyamide aliphatique constitué:

> (i) d'un polyamide fabriqué à partir d'acide aliphatique dicarboxylique et d'une diamine aliphatique, chacun possédant entre 6 et 24 atomes de carbone, et/ou
> (ii) d'un polyamide fabriqué à partir d'un acide aminoaliphatique ou de lactame ayant 6 à 24 atomes de carbone, en particulier des polymamides 6 ou 6/6 ou un mélange des deux.

Les pourcentages pondéraux des différents composants sont choisis de manière à ce que:

$$30 < A + B + C \leq 60 \qquad 0 \leq A \leq 60$$

$$\text{et } B + C \geq 1 \qquad \text{avec } 0 \leq B \leq 60$$

$$\text{et } A + B + C + D = 100 \qquad \text{avec } 0 \leq C \leq 60$$

et les viscosités des différents composés sont telles que la phase polyamide constitue une phase continue, ceci pouvant être caractérisé en ce qu'un film d'épaisseur égale à environ 20 μm plongé 30 minutes dans le xylène à 130°C maintienne sa forme.

Les compositions préférentielles des films selon l'invention sont celles où:

$$30 \leq A + B + C \leq 45 \text{ et } B + C \geq 5.$$

Les exemples suivants illustrent l'invention sans toutefois la limiter.

EXEMPLE 1 (gaine ou film tubulaire)

Dans une extrudeuse WERNER, on introduit en continu un mélange en poids comprenant 33 parties de polypropylène, 57 parties de polyamide-6 et 10 parties de copolymère séquencé de propylène et de 12% en poids d'éthylène, de point de fusion 158°C (copolymère-tronc), maléisé à 1,16% et greffé avec un oligomère de PA-6 monoamine de Mn 2 700 préparé selon le mode opératoire décrit dans EP 342 066. Le long du fourreau, la température matière est comprise entre 255°C et 270°C. La vitesse de rotation de la vis est de 150 tr/mn et le débit de la matière est de 20 kg/h. Les granulés obtenus en sortie d'extrudeuse sont transformés selon une technique d'extrusion-soufflage de gaines dans une extrudeuse KAUFMAN avec filière spiralée à 3 canaux tournante de diamètre 150 mm et d'entrefer 0,8 mm afin de réaliser un film tubulaire de 25 μm. Les conditions opératoires sont les suivantes:

| Température cylindre | 225-250°C |
|---|---|
| Température filière | 250-260°C |
| Vitesse d'étirage | 28 m/mn |

Le PA utilisé est un polyamide-6 de Melt Index (MI) mesuré à 235°C sous une charge de 2,16 kg égal à 20 g/10 mn et le polypropylène est un copolymère statistique de propylène et de 3% en poids d'éthylène de MI égal à 2 g/10 mn (échantillon 1.A).

Afin de déterminer l'aptitude au pelage de ce film, des mesures de tensions superficielles ont été effectuées sur ce film, et, à titre de comparaison, avec un film pelable constitué d'un mélange en poids de 89% de polyamide-6 et 10% d'un copolymère éthylène/acétate de vinyle contenant 9% d'acétate de vinyle et 1% de dioxyde de titane (échantillon 1.B). La tension superficielle des deux échantillons est déterminée en mesurant, à l'aide d'un goniomètre, l'angle de contact à l'avancée à l'équilibre de gouttes de liquides standards sur le substrat conformément à la méthode décrite dans Fowkes F.M., Ind. Eng. Chem., 56 (1964) 40 ou dans Owens D.K. and Wendt R.C., J. Appl. Polymer Sci. 13 (1969) 1741. A titre d'exemple de liquides standards, on peut citer le diiodométhane, le glycérol, l'alcool benzylique.

| N° d'essai | 1.A. | 1.B. |
|---|---|---|
| Tension superficielle (nM.m$^{-1}$) | 32 | 46 |

La faible tension superficielle permet un pelage automatique du film sur le SMC sans provoquer des amorces de déchirure de ce film, qui engendrent des arrêts de chaîne lors de la fabrication du SMC.

Des mesures de perméabilité à la vapeur d'eau ont également été effectuées dans les conditions suivantes:

| . appareil | LYSSY vapor permation tester 1L 80 -40000 |
|---|---|
| . température | 38°C |
| . humidité relative | 90% |
| . détecteur d'humidité résistif | |

Principe de la mesure

La membrane à tester est mise en place dans un espace d'atmosphère saturée et un espace amené provisoirement à une atmosphère sèche. Un détecteur d'humidité résistif placé dans l'espace sec enregistre la variation de l'humidité relative en fonction du temps de façon continue. La mesure du temps nécessaire pour que l'humidité aille d'une valeur limite à une autre est représentative de la perméabilité de l'échantillon.

La mesure du temps est traduite en valeur de perméabilité par comparaison avec les valeurs mesurées au préalable avec un test standard de perméabilité connu.

Les résultats sont exprimés en g/m$^2$/24 h et sont réunis dans le tableau suivant:

| N° d'essai | Perméabilité à la vapeur d'eau |
|---|---|
| 1.A | 56 |
| 1.B | 380 |

Des mesures de reprise d'humidité ont également été effectuées selon la méthode de la pesée (mesure de la reprise en poids à 100% d'humidité relative et 23°C).

| Temps | Reprise | en poids (en %) |
|---|---|---|
| | 1.A | 1.B |
| To | 0 | 0 |
| T = To + 4 h | 2 | 3 |
| T = To + 8 h | 2 | 3 |
| T = To + 24 h | 2,1 | 3 |
| T = To + 96 h | 2,1 | 3,6 |
| T = To + 120 h | 2,1 | 3,6 |

On mesure également la perméabilité au styrène du film 1.A selon la méthode décrite dans la référence Institut Américain des Ingénieurs Chimistes, 53ème Réunion Nationale Preprint n° 32d, 1964, par Bixler et Michaels. Selon cette méthode, l'échantillon présente une perméabilité au styrène d'environ 8 x 10$^{-9}$ g-cm/cm$^2$-h. On considère comme bonne une perméabilité au styrène inférieure à 200 x 10$^{-9}$ g-cm/cm$^2$-h.

EXEMPLE 2 (film à plat)

Dans une extrudeuse WERNER, on introduit en continu un mélange en poids comprenant 29,7 parties de polypropylène homopolymère de MI (230°C/2,16 kg) égal à 5, 10 parties de copolymère éthylène/propylène maléisé (EPRm) contenant 70% en poids d'éthylène et 500 ppm d'anhydride maléique de MI 9 g/10 mn (230°C/10 kg), 51,3 parties de polyamide-6 de MI 20 g/10 mn (235°C/2,16 kg), 9 parties du copolymère troncmaléisé et greffé de l'exemple 1. Le long du fourreau, la température matière est comprise entre 255°C et 270°C, la vitesse de rotation de la vis est de 150 tr/mn et le débit matière est de 20 kg/h. Les granulés obtenus en sortie d'extrudeuse sont transformés selon une technique d'extrusion-cast sur une extrudeuse THORET sous forme de film à plat ou film-cast d'épaisseur 25 µm (échantillon 2.A). Les conditions opératoires sont les suivantes:

| Profil de température | 220-250°C |
|---|---|
| Température cylindre | 80°C |
| Vitesse de vis | 28 tr/mn |

A titre de comparaison, on réalise un film à plat de même composition et de même épaisseur que la gaine de l'échantillon 1.B (échantillon 2.B).

Des mesures de tension superficielle, telles que définies dans l'exemple 1, sont effectuées et réunis dan sle tableau suivant:

| N° d'essai | 2.A. | 2.B. |
|---|---|---|
| Tension superficielle (nM.m$^{-1}$) | 32 | 46 |

Des mesures de perméabilité à la vapeur d'eau ainsi que de reprises d'humidité ont été réalisées et ont donné les résultats suivants:

| N° d'essai | Perméabilité à la vapeur d'eau (en $g/m^2/24h$) |
|---|---|
| 2.A | 50 |
| 2.B | 380 |

| Temps | Reprise en poids (en %) | |
|---|---|---|
| | 2.A | 2.B |
| To | 0 | 0 |
| T = To + 4 h | 1,5 | 3 |
| T = To + 8 h | 1,5 | 3 |
| T = To + 24 h | 1,7 | 3 |
| T = To + 96 h | 1,7 | 3,6 |
| T = To + 120 h | 1,7 | 3,6 |

L'invention, objet de la présente demande concerne également un procédé de fabrication d'un produit de moulage de feuilles où:

(a) une couche de résine thermodurcissable pouvant être cuite thermiquement est coulée, sous forme fluide, sur un film polymère selon l'invention avançant continuellement;
(b) une matière de renforcement est introduite sur la couche de fluide avançant;
(c) un film polymère conforme à l'invention est placé en contact avec la surface supérieure de la couche de fluide renforcée en formant ainsi une masse composite prise en sandwich;
(d) on fait avancer la masse composite en sandwich à travers une série de rouleaux de pétrissage et de compactage; et
(e) on enroule la masse composite en sandwich suivant un rouleau pour la cuisson partielle.

La présente invention concerne également une structure sandwich comprenant:

(i) une couche centrale de produit de compoundage de moulage de feuilles thermodurcissable non cuit renforcé;
(ii) deux couches extérieures de film polymère selon l'invention.

**Revendications**

1. Film polymère en alliage polyamide/polyoléfine pour la fabrication de produit de compoundage de feuilles caractérisé en ce qu'il comprend les composants A, B, C et D selon les pourcentages pondéraux suivants:

$$30 < A + B + C \leq 60 \qquad 0 \leq A \leq 60$$

$$et\ B + C \geq 1 \qquad avec\ 0 \leq B \leq 60$$

$$et\ A + B + C + D = 100 \qquad avec\ 0 \leq C \leq 60;$$

lesdits composants A, B, C et D ayant les compositions suivantes:

A est constitué d'au moins une polyoléfine composée d'une alpha-oléfine complètement ou partiellement linéaire dont le poids moléculaire est compris entre 1 000 et 1 000 000;

B représente l'alpha-oléfine décrite en A sur laquelle un ou deux monomère(s) fonctionnalisé(s) sont greffés; le taux de greffage du ou des monomère(s) fonctionnalisé(s) étant compris entre 500 ppm et 6% en poids;

C est un copolymère greffé constitué d'au moins un oligomère mono-aminé de polyamide et d'un polymère ou copolymère d'alpha mono-oléfine greffé par un monomère pouvant réagir avec la fonction amine dudit oligomère mono-aminé;

D est constitué d'au moins un (co)polyamide aliphatique constitué:

(i) d'un polyamide obtenu à partir d'acide aliphatique dicarboxylique et d'une diamine aliphatique, chacun possédant entre 6 et 24 atomes de carbone, et/ou
(ii) d'un polyamide obtenu à partir d'un acide amino-aliphatique ou de lactame ayant 6 à 24 atomes de carbone.

**2.** Film selon la revendication 1, caractérisé en ce que la polyoléfine du composant A est choisie parmi: le polyéthylène, le polypropylène ou polyisobutylène, copolymères des alpha-oléfines avec des monomères d'acétate de vinyle, notamment les copolymères éthylène/acétate de vinyle, copolymères d'acrylates d'alkyles, notamment les copolymères éthylène/acrylate de méthyle ou éthylène/acrylate d'éthyle, ou copolymères del'éthylène et d'une alpha-oléfine ayant de 3 à 10 atomes de carbone.

**3.** Film selon la revendication 1 ou 2, caractérisé en ce que le poids moléculaire de la polyoléfine du composant A est compris entre 10 000 et 500 000.

**4.** Film selon l'une quelconque des revendications 1 à 3, caractérisé en ce que le monomère fonctionnalisé du composant B est choisi parmi: les acides acrylique, méthacrylique, maléique, fumarique, itaconique, crotonique, 3-dicarboxylique-5-norbornène-2, les anhydrides maléique, diméthylmaléique, les maléates de monosodium, disodium, l'acrylamide, les anhydrides itaconique, citraconique, le maléimide, le N-phénylmaléimide, le fumarate de diéthyle, la vinylpyridine, les vinylsilanes, la 4-vinylpyridine, le vinylthiéthoxysilane, l'alcool allylique, ou un mélange de ceux-ci.

**5.** Film selon la revendication 4, caractérisé en ce que ledit monomère fonctionnalisé est choisi parmi: l'acide maléique, l'anhydride maléique ou l'acide fumarique.

**6.** Film selon l'une quelconque des revendications 1 à 5, caractérisé en ce que les monomères fonctionnalisés du composant B sont choisis, pour l'un parmi: le styrène, le 2-méthylstyrène, le 4-méthylstyrène, l'alphaméthylstyrène, le bétaméthylstyrène, le vinyl-4-anisole, le stilbène et l'indène ou un mélange de ceux-ci; pour l'autre parmi: les anhydrides maléique, itaconique, citraconique, le maléimide et le N-phénylmaléimide ou un mélange de ceux-ci.

**7.** Film selon l'une quelconque des revendications 1 à 5, caractérisé en ce que le taux de greffage du composant B est inférieur à 2% en poids.

**8.** Film selon l'une quelconque des revendications 1 à 5, caractérisé en ce que le composant D est constitué d'un polyamide 6, 6/6, ou un mélange de ceux-ci.

**9.** Film selon l'une quelconque des revendications 1 à 8, caractérisé en ce que: $30 \leq A + B + C \leq 45$ et $B + C \geq 5$.

**10.** Film selon l'une quelconque des revendications 1 à 9, caractérisé en ce qu'il comprend les composants A, B, C et D suivants:

- A est le polypropylène;
- B, si celui-ci est présent, est un copolymère d'éthylène et de propylène maléisé;
- C est un copolymère greffé constitué d'au moins un oligoamide mono-aminé et d'un (co)polymère d'alpha-oléfine greffé par un monomère pouvant réagir avec la fonction amine dudit oligoamide;
- D est le PA-6 et/ou le PA-6/6.

**11.** Film selon l'une quelconque des revendications 1 à 10, caractérisé en ce que son épaisseur est de 10 à 130 μm, de préférence 20 à 50 μm.

**12.** Structure sandwich comprenant:

(i) une couche centrale de produit de compoundage de feuilles thermodurcissable non cuit et renforcé;

(ii) deux couches extérieures de film selon l'une quelconque des revendications 1 à 11.

**13.** Procédé de production de produit de compoundage de moulage de feuilles où:

(a) une couche de résine thermodurcissable pouvant être cuite thermiquement est coulée, sous forme fluide, sur un film polymère tel que défini dans l'une quelconque des revendications 1 à 11, avançant continuellement;

(b) une matière de renforcement est introduite sur la couche de fluide avançant;

(c) un film polymère tel que défini dans l'une quelconque des revendications 1 à 11 est placé en contact avec la surface supérieure de la couche de fluide renforcée en formant ainsi une masse composite prise en sandwich;

(d) on fait avancer la masse composite en sandwich à travers une série de rouleaux de pétrissage et de compactage; et

(e) on enroule la masse composite en sandwich suivant un rouleau pour la cuisson partielle.

## Claims

**1.** A polymer film formed of a polyamide/polyolefin alloy for the production of a sheet molding compound, characterized in that it comprises components A, B, C and D in the following percentages by weight:

$$30 < A + B + C \leq 60 \qquad\qquad 0 \leq A \leq 60$$

$$\text{and } B + C \geq 1 \qquad\qquad \text{where } 0 \leq B \leq 60$$

$$\text{and } A + B + C + D = 100 \qquad\qquad \text{where } 0 \leq C \leq 60;$$

said components A, B, C and D having the following compositions:

A consists of at least one polyolefin comprising a totally or partially linear alpha-olefin the molecular weight of which is comprised between 1000 and 1 000 000;

B represents the alpha-olefin specified under A on which one or two functionalized monomers have been grafted, the grafting rate of the functionalized monomer or monomers being comprised between 500 ppm and 6% by weight;

C is a grafted polymer consisting of at least one polyamide mono-amino oligomer and a polymer or copolymer of alpha mono-olefin grafted with a monomer able to react with the amine function of said mono-amino oligomer;

D is constituted by at least one aliphatic (co)polyamide consisting:

(i) of a polyamide obtained from aliphatic dicarboxylic acid and an aliphatic diamine, each of which has between 6 and 24 carbon atoms, and/or

(ii) of a polyamide obtained from an amino-aliphatic acid or lactame having 6 to 24 carbon atoms.

**2.** Film according to claim 1, characterized in that the polyolefin of component A is selected from the group comprising: polyethylene, polypropylene or polyisobutylene, copolymers of alpha-olefins with vinyl acetate monomers, notably ethylene/-vinyl acetate copolymers, alkyl acrylate copolymers, notably ethylene/methyl acrylate copolymers or ethylene/ethyl acrylate copolymers or copolymers of ethylene and an alpha-olefin having 3 to 10 carbon atoms.

**3.** Film according to claim 1 or 2, characterized in that the molecular weight of the polyolefin of component A is comprised between 10 000 and 500 000.

**4.** Film according to any one of claims 1 to 3, characterized in that the functionalized monomer of component B is selected from the group comprising: acrylic, methacrylic, maleic, fumaric, itaconic, crotonic, 3-dicarboxylic-5-norbornene-2 acids, maleic, dimethylmaleic anhydrides, mono-sodium, di-sodium maleates, acrylamide, itaconic anhydrides, citraconic anhydrides, maleimide, N-phenylmaleimide, diethyl fumarate, vinylpyridine, the vinylsilanes, 4-vinylpyridine, vinylthiethoxysilane, allylic alcohol, or a mixture thereof.

**5.** Film according to claim 4, characterized in that said functionalized monomer is selected from the group comprising: maleic acid, maleic anhydride or fumaric acid.

6. Film according to any one of claims 1 to 5, characterized in that the functionalized monomers of component B are selected one from the group comprising styrene, 2-methylstyrene, 4-methylstyrene, alpha-methylstyrene, beta-methylstyrene, vinyl-4-anisole, stilbene and indene or mixtures thereof, and the other is selected from the group comprising: maleic, itaconic, citraconic anhydrides, maleimide, and N-phenylmaleimide or a mixture thereof.

7. Film according to any oe of claims 1 to 5, characterized in that the grafting rate of compound B is less than 2% by weight.

8. Film according to any one of claims 1 to 5, characterized in that compound D consists of a 6 polyamide, 6/6 polyamide or a mixture thereof.

9. Film according to claim 1, characterized in that the following holds: $30 \leq A + B + C \leq 45$ and $B + C \geq 5$

10. Film according to any one of claims 1 to 9, comprising the following components A, B, C and D:

   - A is polypropylene;
   - B, if present, is a copolymer of ethylene and maleic-grafted propylene;
   - C is a grafted copolymer consisting of at least one mono-amino oligoamide and a (co)polymer of alpha-olefin grafted by a monomer able to react with the amine function of said oligoamide;
   - D is 6-polyamide and/or 6/6-polyamide.

11. Film according to any one of claims 1 to 10, characterized in that the thickness of said film is comprised in the range of from 10 to 130 µm, and preferably from 20 to 50 µm.

12. A sandwich-structure comprising:

   (i) a central layer of a reinforced unhardened thermosetting sheet molding product,
   (ii) two outer layers of polymer film according to any one of claims I to 11.

13. A method for producing a sheet molding compound in which:

   a) a layer of thermosetting resin suitable for thermal processing is poured, in fluid form, onto a polymer film as defined in any one of claims I to 11, advancing continuously,
   b) a reinforcing material is introduced onto the advancing fluid layer,
   c) a polymer film as defined in any one of claims I to 11 is placed in contact with the upper surface of the reinforced fluid layer thus forming a composite mass of a sandwich-structure,
   d) the sandwich-structure composite mass is caused to advance through a series of kneading and compacting rollers, and
   e) the sandwich-structure composite mass is rolled into a roll for partial heat treatment.

**Patentansprüche**

1. Polymerer Film aus einer Polyamid/Polyolefin-Mischung zur Herstellung eines Schichtwerkstoffs, dadurch gekennzeichnet, daß er die Komponenten A, B, C und D in den folgenden Gewichtsprozenten enthält:

$$30 < A + B + C \leq 60 \qquad 0 \leq A \leq 60$$

$$und\ B + C \geq 1 \qquad mit\ 0 \leq B \leq 60$$

$$und\ A + B + C + D = 100 \qquad mit\ 0 \leq C \leq 60;$$

wobei die Komponenten A, B, C, und D die folgenden Zusammensetzungen haben:

A besteht aus mindestens einem Polyolefin, das aus einem vollständig oder teilweise linearen $\alpha$-Olefin mit einem Molekulargewicht zwischen 1 000 und 1 000 000 zusammengesetzt ist;
B stellt das in A beschriebene $\alpha$-Olefin dar, auf das ein oder zwei funktionalisierte Monomere gepfropft sind; der Pfropfgehalt des oder der funktionalisierten Monomere liegt zwischen 500 ppm und 6 Gew.-%;

C ist ein gepfropftes Copolymer aus mindestens einem monoaminierten Oligomer des Polyamids und einem Polymeren oder Copolymeren eines $\alpha$-Monoolefins, das mit einem Monomeren gepfropft ist, das mit der Aminfunktion des monoaminierten Oligomers reagieren kann;

D besteht aus mindestens einem aliphatischen (Co-)Polyamid, bestehend aus:

(i) einem Polyamid, erhalten ausgehend von einer aliphatischen Dicarbonsäure und einem aliphatischen Diamin, die jeweils zwischen 6 und 24 Kohlenstoffatome aufweisen, und/oder
(ii) einem Polyamid, erhalten ausgehend von einer aliphatischen Aminosäure oder einem Lactam mit 6 bis 24 Kohlenstoffatomen.

2.  Film nach Anspruch 1, dadurch gekennzeichnet, daß das Polyolefin der Komponente A ausgewählt ist aus Polyethylen, Polvpropylen oder Polyisobutylen, Copolymeren von $\alpha$-Olefinen mit Vinylacetatmonomeren, insbesondere Ethylen/Vinylacetat-Copolymeren, Alkylacrylatcopolymeren, insbesondere Ethylen/Methylacrylat- oder Ethylen/Ethylacrylatcopolymeren, oder Copolymeren des Ethylens und eines $\alpha$-Olefins mit 3 bis 10 Kohlenstoffatomen.

3.  Film nach Anspruch 1 oder 2, dadurch gekennzeichnet, daß das Molekulargewicht des Polyolefins der Komponente A zwischen 10 000 und 500 000 beträgt.

4.  Film nach einem der Ansprüche 1 bis 3, dadurch gekennzeichnet, daß das funktionalisierte Monomere der Komponente B ausgewählt ist aus Acrylsäure, Methacrylsäure, Maleinsäure, Fumarsäure, Itaconsäure, Crotonsäure, 5-Norborn-2-en-3-dicarbonsäure, Maleinsäureanhydrid, Dimethylmaleinsäureanhydrid, Mono- und Dinatriummaleaten, Acrylamid, Itaconanhydrid, Citraconanhydrid, Maleinimid, N-Phenylmaleinimid, Diethylfumarat, Vinylpyridin, Vinylsilanen, 4-Vinylpyridin, Vinylthiethoxysilan, Allylalkohol oder einer Mischung dieser Verbindungen.

5.  Film nach Anspruch 4, dadurch gekennzeichnet, daß das funktionalisierte Monomere ausgewählt ist aus Maleinsäure, Maleinsäureanhydrid oder Fumarsäure.

6.  Film nach einem der Ansprüche 1 bis 5, dadurch gekennzeichnet, daß die funktionalisierten Monomere der Komponente B ausgewählt sind zum einen aus Styrol, 2-Methylstyrol, 4-Methylstyrol, $\alpha$-Methylstyrol, $\beta$-Methylstyrol, Vinyl-4-anisol, Stilben und Inden oder eine Mischung dieser Verbindungen und zum anderen aus Maleinsäureanhydrid, Itaconsäureanhydrid, Citraconsäureanhydrid, Maleinimid und N-Phenylmaleinimid oder einer Mischung dieser Verbindungen.

7.  Film nach einem der Ansprüche 1 bis 5, dadurch gekennzeichnet, daß der Pfropfgehalt der Komponente B unterhalb von 2 Gew.-% liegt.

8.  Film nach einem der Ansprüche 1 bis 5, dadurch gekennzeichnet, daß die Komponente D aus Polyamid 6, 6/6 oder einer Mischung dieser Verbindungen besteht.

9.  Film nach einem der Ansprüche 1 bis 8, dadurch gekennzeichnet, daß $30 \leq A + B + C \leq 45$ und $B + C \geq 5$.

10. Film nach einem der Ansprüche 1 bis 9, dadurch gekennzeichnet, daß er die folgenden Komponenten A, B, C und D umfaßt:

    -   A ist Polypropylen;
    -   B, falls vorhanden, ist ein Copolymer von Ethylen und maleinsäurehaltigen, Propylen;
    -   C ist ein gepfropftes Copolymer aus mindestens einem monoaminierten Oligoamid und einem (Co)-Polymer eines $\alpha$-Olefins, das mit einem Monomeren gepfropft ist, das mit der Aminfunktion des Oligoamids reagieren kann;
    -   D ist PA-6 und/oder PA-6/6.

11. Film nach einem der Ansprüche 1 bis 10, dadurch gekennzeichnet, daß seine Dicke 10 bis 130 µm, vorzugsweise 20 bis 50 µm, beträgt.

12. Sandwich-Struktur, umfassend

    (i) eine zentrale Schicht eines warmhärtbaren, nichtausgehärteten und verstärkten Schichtwerkstoffs;
    (ii) zwei äußere Schichten eines Film nach einem der Ansprüche 1 bis 11.

**13.** Verfahren zur Herstellung eines formbaren Schichtwerkstoffs, wobei

(a) eine Schicht eines warmhärtbaren Harzes, das thermisch ausgehärtet werden kann, in fluider Form auf einen Polymerfilm gegossen wird, der in einem der Ansprüche 1 bis 11 definiert ist, wobei man den polymeren Film ständig vorwärts bewegt;

(b) ein Verstärkungsmaterial auf die vorwärts bewegte Fluidschicht aufgebracht wird;

(c) ein Polymerfilm wie in den Ansprüchen 1 bis 11 definiert, mit der oberen Oberfläche der Fluidschicht in Kontakt gebracht wird, wobei somit eine sandwichartige Verbundmasse gebildet wird;

(d) man die Sandwich-Verbundmasse durch eine Reihe von Knet- und Verdichtungswalzen hindurchführt; und

(e) man die Sandwich-Verbundmasse auf eine Walze für die partielle Aushärtung aufwickelt.